# EUROPÄISCHE PATENTANMELDUNG

(11) **EP 4 624 747 A1**
(43) Veröffentlichungstag der Anmeldung: **01.10.2025**
(21) Anmeldenummer: 25164026.4
(22) Anmeldetag: 17.03.2025
(51) Int. Cl.: F03D 1/06, F03D 80/50

(54) **WINDENERGIEANLAGENROTORBLATT MIT EINER BODENPLATTE MIT DURCHSTIEGSÖFFNUNG**

(30) Priorität: 27.03.2024 DE 102024108676
(71) Anmelder: Nordex Energy SE & Co. KG, 22419 Hamburg (DE)
(72) Erfinder: Baars, Peter, 22419 Hamburg (DE)
(74) Vertreter: Hauck Patent- und Rechtsanwälte PartmbB

(57) **Zusammenfassung**

Windenergieanlagenrotorblatt mit einer Bodenplatte, die eine Durchstiegsöffnung aufweist, und eine Abdeckung, mit dem die Durchstiegsöffnung verschließbar ist, gekennzeichnet durch
• eine Halterung, die so ausgebildet ist, dass eine Bewegung der Abdeckung relativ zu der Bodenplatte in einer vorgegebenen Richtung parallel zur Ebene der Bodenplatte einen formschlüssigen Halt der Abdeckung an der Bodenplatte bewirkt, und
• eine Verriegelung, die eine Bewegung der Abdeckung in zu der vorgegebenen Richtung entgegengesetzten Richtung blockiert.

## Beschreibung

Die Erfindung betrifft ein Windenergieanlagenrotorblatt mit einem Innenraum, einer Bodenplatte, die den Innenraum begrenzt und die eine Durchstiegsöffnung aufweist, und einer Abdeckung, mit der die Durchstiegsöffnung verschließbar ist.

Windenergieanlagenrotorblätter weisen eine Bodenplatte auf, die in der Regel am blattwurzelseitigen Ende des Windenergieanlagenrotorblatts angeordnet ist und gelegentlich auch als Schott bezeichnet wird. Die Bodenplatte grenzt den Innenraum des Rotorblatts ab und hat eine Vielzahl von Funktionen: Die Bodenplatte kann den Bereich der Blattwurzel versteifen, als Plattform für das Wartungspersonal dienen und/oder zur Montage von Baugruppen beispielsweise für ein Enteisungssystem genutzt werden. Außerdem verhindert die Bodenplatte, dass im Betrieb des Rotorblatts Gegenstände aus dem Rotorblatt in die Nabe gelangen und umgekehrt. Beispielsweise können sich im Inneren des Rotorblatts Klebstoffreste lösen, die nicht in die Nabe fallen sollten.

Für Wartungsarbeiten im Inneren des Rotorblatts hat die Bodenplatte eine Durchstiegsöffnung, durch die hindurch eine Person in den Innenraum steigen kann. Bei Wartungsarbeiten in der Nabe dient die Bodenplatte auch als Standplattform, dann muss die Durchstiegsöffnung sicher verschlossen sein.

Zum Verschließen der Durchstiegsöffnung können Verschluss- oder Abdeckplatten eingesetzt werden, die mit der Bodenplatte verschraubt werden. Ebenfalls bekannt sind Deckel, die mit Spannelementen, welche die Bodenplatte am Rand der Durchstiegsöffnung hintergreifen, verspannt werden.

Aus der Druckschrift EP 1 925 818 A2 sind Windenergieanlagenrotorblätter bekannt, die in der Bodenplatte eine Durchstiegsöffnung mit einer Lukenklappe aufweisen. Derartige Lukenklappen sind schwenkbar an einem in die Bodenplatte eingesetzten Rahmen angelenkt und können in der Geschlossenstellung mit Drehgriffen verriegelt werden.

Davon ausgehend ist es die Aufgabe der Erfindung, ein Windenergieanlagenrotorblatt mit einer Bodenplatte zur Verfügung zu stellen, deren Durchstiegsöffnung mit einfachen Mitteln sicher und mit minimalem Risiko einer Fehlbedienung verschließbar ist.

Diese Aufgabe wird gelöst durch das Windenergieanlagenrotorblatt mit den Merkmalen des Anspruchs 1. Vorteilhafte Ausgestaltungen sind in den Unteransprüchen angegeben.

Das Windenergieanlagenrotorblatt hat eine Bodenplatte, die eine Durchstiegsöffnung aufweist, und eine Abdeckung, mit der die Durchstiegsöffnung verschließbar ist, und zeichnet sich aus durch
- eine Halterung, die so ausgebildet ist, dass eine Bewegung der Abdeckung relativ zu der Bodenplatte in einer vorgegebenen Richtung parallel zur Ebene der Bodenplatte einen formschlüssigen Halt der Abdeckung an der Bodenplatte bewirkt, und
- eine Verriegelung, die eine Bewegung der Abdeckung in zu der vorgegebenen Richtung entgegengesetzten Richtung blockiert.

Die Abdeckung kann vollständig von der Bodenplatte entfernt werden, eine ständige Verbindung beispielsweise über ein Gelenk ist nicht vorgesehen. Dennoch ist ein sicheres Verschließen der Durchstiegsöffnung dank der Halterung und der Verriegelung sehr einfach möglich: Nachdem die Abdeckung an die Bodenplatte herangeführt wurde, genügt eine Bewegung in einer vorgegebenen Richtung parallel zur Ebene der Bodenplatte, um einen formschlüssigen Halt der Abdeckung an der Bodenplatte zu bewirken. Anschließend ist die Abdeckung bereits an der Bodenplatte gehalten, sodass sie nicht mehr herunterfallen kann. Allerdings kann der formschlüssige Halt jederzeit dadurch wieder aufgehoben werden, dass die Abdeckung relativ zu der Bodenplatte entgegengesetzt zu der zuvor ausgeführten Bewegung bewegt wird.

Darum ist für die sichere Befestigung der Abdeckung an der Bodenplatte eine Verriegelung vorgesehen, die eben dieses Zurückbewegen blockiert. Da jede andere denkbare Bewegung bereits durch den formschlüssigen Halt, der von der Halterung bewirkt wird, verhindert wird, ist die Abdeckung nach dem Wirksamwerden der Verriegelung sicher an der Bodenplatte fixiert und kann erst nach Aufheben der Verriegelung wieder gelöst werden.

Die Vorteile der Erfindung bestehen in der besonders einfachen Konstruktion und der besonders einfachen Handhabung der Abdeckung. Insbesondere ist es für die sichere Befestigung der Abdeckung an der Bodenplatte nicht erforderlich, die Bauteile wie aus dem Stand der Technik bekannt miteinander zu verspannen. Der durch eine Verspannung erzielte, kraftschlüssige Halt ist grundsätzlich weniger zuverlässig als der bei der Erfindung vorgesehene, formschlüssige Halt. Zudem erfordert eine Verspannung in der Regel mehrere Handgriffe, um die Abdeckung an mehreren Punkten mit der Bodenplatte zu verspannen. Weiterhin ist eine genaue Abstimmung der Abmessungen der miteinander zu verspannenden Bauteile aufeinander notwendig, insbesondere müssen üblicherweise verwendete Spannelemente, welche die Bodenplatte am Rand der Durchstiegsöffnung hintergreifen, auf die Dicke der Bodenplatte abgestimmt sein. Die bei der Erfindung vorgesehene Halterung ist dem gegenüber wesentlich einfacher und universeller einsetzbar, insbesondere kann sie ohne Weiteres mit Bodenplatten unterschiedlicher Dicke kombiniert werden.

Die konstruktive Vereinfachung ergibt sich einerseits aus einer entsprechend einfach aufgebauten Halterung. Andererseits kann durch die Halterung auch das Zusammenwirken der Abdeckung mit der Bodenplatte besonders einfach gehalten werden.

Insbesondere kann die Abdeckung vollständig auf einer Seite der Bodenplatte formschlüssig gehalten sein, d.h. ohne in die Durchstiegsöffnung einzugreifen und/oder ohne mit einem Öffnungsrand der Durchstiegsöffnung zusammenzuwirken oder diesen zu hintergreifen. Eine genaue Anpassung der Abdeckung auf die Abmessungen der Durchstiegsöffnung ist darum auch in dieser Hinsicht nicht erforderlich. Es genügt, wenn die Abdeckung hinreichend groß ist, um die Durchstiegsöffnung in der gewünschten Art und Weise zu verschließen, und die Halterung so befestigt ist, dass sie ihre Funktion erfüllen kann. Hierzu kann die Halterung insbesondere in einer durch die Ausführung der Abdeckung vorgegebenen Position an der Bodenplatte befestigt werden.

Die Halterung kann vollständig auf derselben Seite der Bodenplatte angeordnet sein, auf der auch die Abdeckung angeordnet wird. Die auf der von der Abdeckung abgewandten Seite der Bodenplatte befindlichen Bereiche können unberührt bleiben. In diesem Fall kann der ordnungsgemäße Zustand der Befestigung vollständig von der Seite der Bodenplatte aus, auf der die Abdeckung angeordnet ist, überprüft werden.

Grundsätzlich kann die Bewegung der Abdeckung relativ zu der Bodenplatte in der vorgegebenen Richtung eine Translationsbewegung sein, vorzugsweise in einer Richtung von oben nach unten, etwa durch Einhängen der Abdeckung in eine hakenförmige Halterung. Da die Ausrichtung des Rotorblatts und damit der Bodenplatte bei Wartungsarbeiten im Rotor der Windenergieanlage jedoch variiert, ist die Bewegung in einer bevorzugten Ausgestaltung eine Rotationsbewegung. Die Abdeckung wird also an die Bodenplatte herangeführt und dann um einen vorgegebenen Winkel gedreht, insbesondere etwa um einen Mittelpunkt der Abdeckung. Die Halterung kann so ausgeführt sein, dass sie eine Führung dieser Rotationsbewegung bewirkt.

In einer Ausgestaltung weist die Halterung mehrere Führungsschlitze, die jeweils entlang der vorgegebenen Richtung verlaufen, und mehrere damit zusammenwirkende Stifte auf, die in die Führungsschlitze eingreifen, wobei die Führungsschlitze an der Abdeckung und die Stifte an der Bodenplatte angeordnet sind oder umgekehrt. Mit "oder umgekehrt" ist gemeint, dass die Stifte an der Abdeckung und die Führungsschlitze an der Bodenplatte angeordnet sind. Die Führungsschlitze bewirken die angesprochene Führung, beim Ausführen der Relativbewegung bewegen sich die Stifte in den Führungsschlitzen. In der Variante mit einer Rotationsbewegung können die Führungsschlitze auf Abschnitten von Kreisbahnen um den Mittelpunkt der Rotationsbewegung herum verlaufen. Insbesondere können die Stifte jeweils einen Kopf aufweisen, dessen Breite größer ist als die Breite des damit zusammenwirkenden Führungsschlitzes. Nach dem Einführen des Stifts in den zugehörigen Führungsschlitz kann der Stift dann nicht mehr versehentlich aus dem Führungsschlitz "herausrutschen".

In einer Ausgestaltung sind die Führungsschlitze und die Stifte asymmetrisch angeordnet sind, so dass die Abdeckung nur in einer einzigen Orientierung so an der Bodenplatte angeordnet werden kann, dass die Stifte in die Führungsschlitze eingreifen. Beispielsweise können die Führungsschlitze (und entsprechend auch die Stifte) auf einem Kreis angeordnet sein, zum Beispiel am Rand einer kreisförmigen Abdeckung. Die Abstände zwischen den Führungsschlitzen können so gewählt werden, dass mindestens einer der Führungsschlitze von einem gleichmäßigen Abstandsraster abweicht. Dadurch wird sichergestellt, dass die Abdeckung immer in derselben Orientierung montiert wird. Dies kann zum Beispiel von Bedeutung sein, wenn an der Abdeckung Handgriffe angeordnet sind, die sich immer in einer griffgünstigen Position befinden sollen oder die bei Fehlpositionierung z.B. mit einer im Bereich der Durchgangsöffnung aufzustellenden Leiter kollidieren könnten.

In einer Ausgestaltung sind die Führungsschlitze schlüssellochförmige Langlöcher. Die Langlöcher weisen einen kreisförmigen Abschnitt und einen schlitzförmigen Abschnitt auf, wobei die Breite des schlitzförmigen Abschnitts kleiner ist als der Durchmesser des kreisförmigen Abschnitts. Die Stifte sind so auf die Abmessungen der Langlöcher abgestimmt, dass sie mit ihren Köpfen durch den, kreisförmigen Bereich des Langlochs hindurchgeführt werden können und nach dem Ausführen der vorgesehenen Bewegung der Stift in den schlitzförmigen Bereich des Langlochs eingreift, sodass der Kopf den Schlitz hintergreift. Die Handhabung einer Abdeckung mit schlüssellochförmigen Langlöchern ist besonders intuitiv und einfach, weil das Ansetzen der Abdeckung nur in einer einzigen, vorgegebenen und einfach erfassbaren Stellung möglich ist und die für das Wirksamwerden der Halterung auszuführende Bewegung durch die Form der Führungsschlitze vorgegeben ist.

In einer Ausgestaltung sind in die Bodenplatte Gewindehülsen eingesetzt, in die die Stifte eingeschraubt sind. Die Gewindehülsen weisen ein Innengewinde und die Stifte ein dazu passendes Außengewinde auf. Diese Lösung ermöglicht eine einfache und sichere Befestigung der Stifte in der Bodenplatte. Die Bodenplatte besteht typischerweise aus einem faserverstärkten Kunststoffmaterial, häufig in Sandwichbauweise. Eine Gewindehülse mit relativ großem Außendurchmesser kann in diesem Material besonders einfach und sicher befestigt werden, zum Beispiel durch Einkleben in eine passende Bohrung. Der Stift selbst weist hierfür in der Regel einen zu geringen Durchmesser auf. Eine weitere Vereinfachung ergibt sich bei der Verwendung einer Gewindehülse in Form eines selbstschneidenden Gewindeeinsatzes. Dieser kann einfach in eine zuvor ausgeführte Bohrung, insbesondere in eine Sackbohrung, eingeschraubt werden. Grundsätzlich ist es natürlich auch möglich, die Stifte durch die Bodenplatte hindurchzuführen und an der Rückseite zu fixieren, beispielsweise mit einer Mutter. Dies ist jedoch aufwendiger und für eine sichere Befestigung nicht notwendig.

In einer Ausgestaltung sind die Stifte Bund- oder Kragenschrauben. Die Bund- oder Kragenschrauben haben jeweils einen Gewindeabschnitt, der bevorzugt in die Gewindehülse eingeschraubt wird, und zwischen dem Gewindeabschnitt und einem optional am anderen Ende ausgebildeten Kopf eine Stufe/einen Bund oder einen umlaufenden Kragen, die oder der sich nach dem vollständigen Einschrauben in die Gewindehülse an der Gewindehülse oder an der Außenseite der Bodenplatte abstützt und eine sichere Fixierung exakt in der gewünschten Stellung ermöglicht. Bund- oder Kragenschrauben sind ebenso wie die genannten Gewindehülsen als standardisierte Bauteile aus unterschiedlichen geeigneten Materialien verfügbar, was zu einer kostengünstigen Konstruktion beiträgt.

In einer Ausgestaltung weist die Bodenplatte einen Ring aus einem Faserverbundmaterial auf, der die Durchstiegsöffnung begrenzt. Außerhalb des Rings kann die Bodenplatte insbesondere in Sandwichbauweise hergestellt, d.h. ein Kernmaterial aufweisen, das zwischen zwei die Außenseiten der Bodenplatte bildenden Deckschichten insbesondere aus einem Faserverbundmaterial angeordnet ist. Der Ring kann insbesondere aus einem Volllaminat bestehen. Dies erhöht die Festigkeit der Bodenplatte im Bereich der Durchstiegsöffnung und erleichtert die sichere Verankerung der Halterung im Bereich des Rings.

In einer Ausgestaltung weist die Verriegelung einen Schnappmechanismus auf, der nach Abschluss der Bewegung der Abdeckung relativ zu der Bodenplatte einrastet. In diesem Fall erfolgt die Verriegelung automatisch, ohne dass entsprechende Verriegelungselemente manuell betätigt werden müssen. Dies trägt zur Sicherheit der Befestigung bei, insbesondere wenn das Einrasten der Verriegelungselemente von einer Bedienperson deutlich wahrgenommen werden kann. Dann wird die Bedienperson die Bewegung automatisch so vollständig ausführen, dass die Verriegelung ordnungsgemäß einrastet.

In einer Ausgestaltung weist der Schnappmechanismus mindestens einen Verriegelungsstift auf, der durch Federkraft in eine verriegelte Stellung gelangt. Dies führt zu einer sicheren Verriegelung.

In einer Ausgestaltung weist der Schnappmechanismus eine Anzeige auf, die eine eingeschnappte Stellung des Schnappmechanismus anzeigt. In diesem Fall erhält die Bedienperson eine visuelle Rückmeldung über die ordnungsgemäße Verriegelung. Diese bleibt dauerhaft sichtbar, sodass die ordnungsgemäße Verriegelung jederzeit verifiziert werden kann.

In einer Ausgestaltung ist an der Bodenplatte und/oder an der Abdeckung eine Markierung angeordnet, die die Anordnung der Abdeckung in einer ordnungsgemäß geschlossenen Position anzeigt. Dies ermöglicht eine alternative oder zusätzliche Kontrolle, ob die Abdeckung korrekt an der Bodenplatte fixiert ist.

In einer Ausgestaltung weist die Abdeckung zwei Handgriffe auf. Die beiden Handgriffe sind bevorzugt an gegenüberliegenden Seiten der Abdeckung angeordnet. Durch die Handgriffe kann die Abdeckung einfach gehandhabt werden.

In einer Ausgestaltung ist die Abdeckung eine Metallplatte, bevorzugt eine Platte aus Aluminium, die kreisförmig ausgeführt sein kann. Bei dieser Variante ist die Abdeckung sehr leicht, aber trotzdem robust und ohne Weiteres als Standplattform geeignet.

In einer Ausgestaltung weist die Verriegelung zwei Verriegelungselemente auf, die benachbart zu den Handgriffen angeordnet sind. In einer verriegelten Stellung bewirken die beiden Verriegelungselemente eine sichere Verriegelung. Die Anordnung im Bereich der Handgriffe vereinfacht die Bedienung der Verriegelungselemente, insbesondere beim Lösen der Verriegelung. Insbesondere kann schon während des Lösens der Verriegelungselemente die Abdeckung mit den Händen an den Handgriffen gehalten werden, oder jedenfalls unmittelbar nach dem Lösen der Verriegelung. Dies erhöht die Sicherheit insbesondere beim Entfernen der Abdeckung, weil verhindert wird, dass sich die Abdeckung nach dem Lösen der Verriegelung unbeabsichtigt aus der Halterung herausbewegt.

Nachfolgend wird die Erfindung anhand eines in Figuren dargestellten Ausführungsbeispiels näher erläutert. Es zeigen:
- Fig. 1: das blattwurzelseitige Ende eines Windenergieanlagenrotorblatts mit Bodenplatte und Abdeckung,
- Fig. 2: einen Ausschnitt der Bodenplatte aus Fig. 1 bei entfernter Abdeckung,
- Fig. 3a: die Abdeckung aus Fig. 1 in einer Draufsicht,
- Fig. 3b: eine Variante der Abdeckung aus Fig. 3a,
- Fig. 4: eine Ausschnittvergrößerung aus Fig. 3b,
- Fig. 5: einen Abschnitt der Abdeckung in an der Bodenplatte verriegelter Stellung,
- Fig. 6: eine Schnittdarstellung der Anordnung aus Fig. 5 und
- Fig. 7: eine weitere Schnittdarstellung der Anordnung aus Fig. 5.

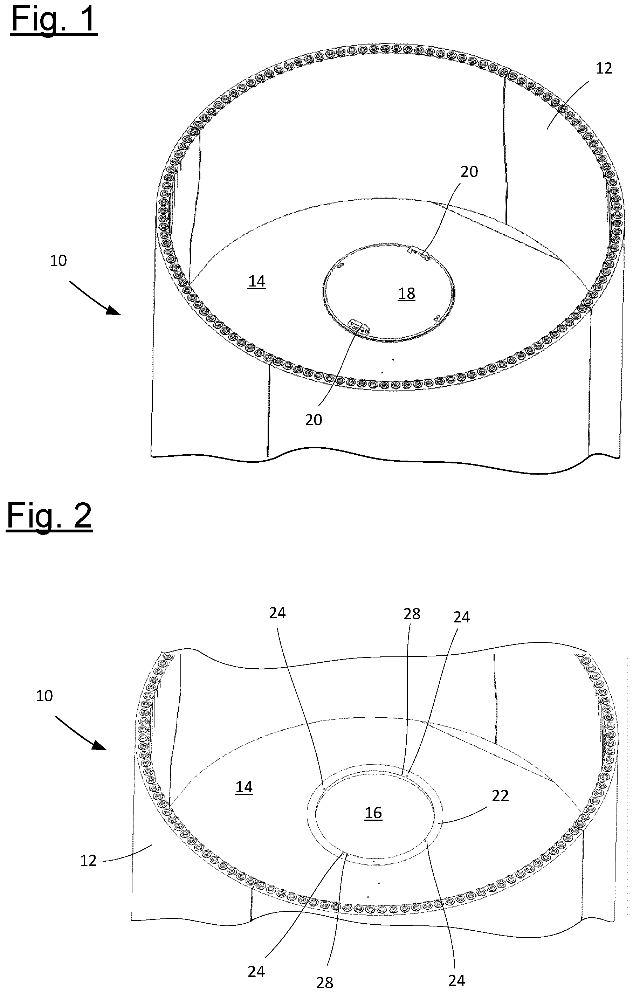

Figur 1 zeigt das blattwurzelseitige Ende eines Windenergieanlagenrotorblatts 10 in einer perspektivischen Ansicht. Nahe der Blattwurzel 12 weist das Rotorblatt einen etwa kreiszylindrischen Abschnitt auf, in dem eine Bodenplatte 14 angeordnet ist. Diese ist in Sandwichbauweise hergestellt und dient unter anderem zur Versteifung der Blattwurzel 12. Die Bodenplatte 14 weist eine Durchstiegsöffnung 16 (siehe Figur 2) auf, die mit einer Abdeckung 18 verschlossen ist. Die Abdeckung 18 ist eine kreisförmige Metallplatte mit zwei Handgriffen 20. Die Einzelheiten sind in den folgenden Figuren besser erkennbar.

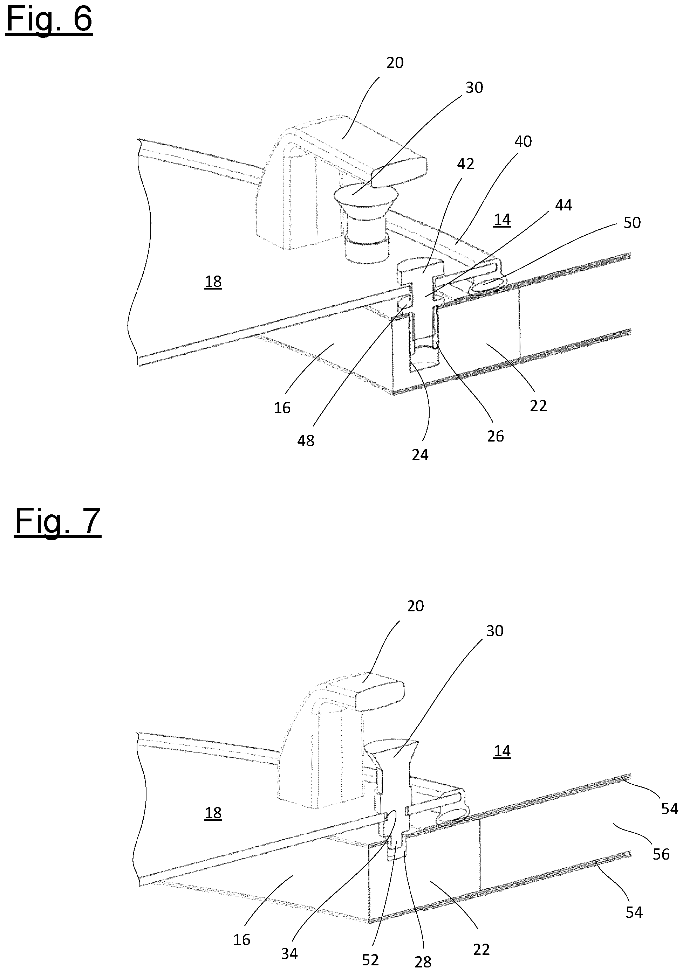

Figur 2 zeigt einen Ausschnitt aus der Bodenplatte 14 der Fig. 1 bei entfernter Abdeckung 18. Man erkennt die kreisförmige Durchstiegsöffnung 16, die im Beispiel einen Durchmesser von etwa 60 cm aufweist, sodass eine Person problemlos in das Innere des Windenergieanlagenrotorblatts 10 gelangen kann. Die Durchstiegsöffnung 16 ist begrenzt von einem Ring 22 aus einem Faserverbundmaterial, der ein integraler Bestandteil der Bodenplatte 14 ist. Ebenfalls in Fig. 2 erkennbar ist die Anordnung von vier Bohrungen 24, die jeweils eine Gewindehülse 26 (siehe Fig. 6) aufnehmen, und zwei kleineren Bohrungen 28, in die jeweils ein Verriegelungsstift 30 (siehe Fig. 7) eingreifen kann.

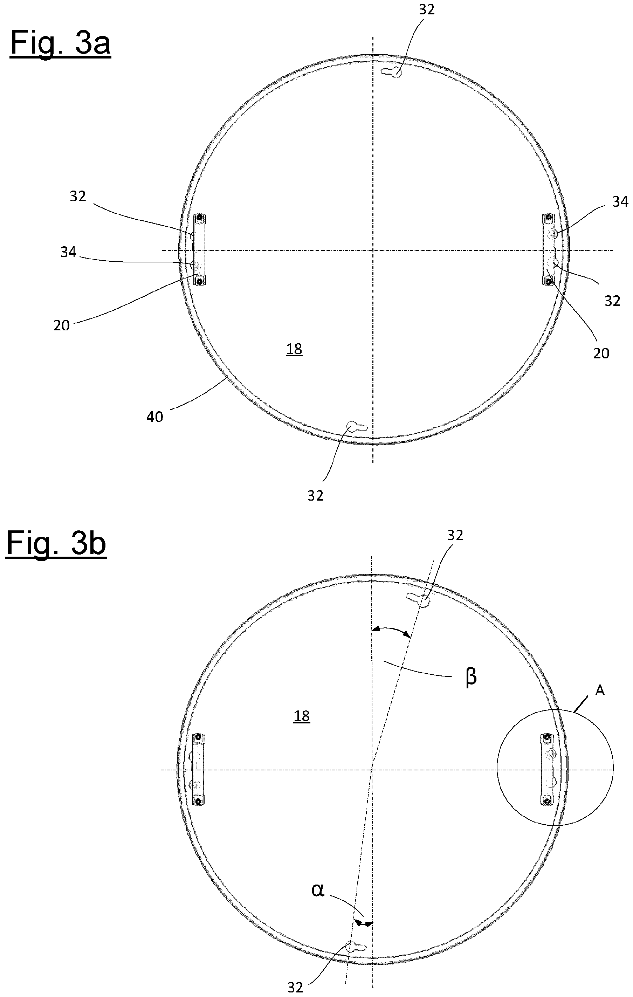

Figur 3a zeigt eine Draufsicht auf die Abdeckung 18. Die Abdeckung 18 weist vier schlüssellochförmige Langlöcher 32 auf, von denen zwei einander gegenüberliegend und jeweils benachbart zu einem der Handgriffe 20 angeordnet sind. Zwei weitere schlüssellochförmige Langlöcher 32 sind in Figur 3 oben und unten, etwa mittig zwischen den beiden Handgriffen 20 erkennbar. Sie sind relativ zu den beiden anderen schlüssellochförmigen Langlöchern 32 nahe den Handgriffen 20 um etwas mehr als 90° versetzt angeordnet, damit die Abdeckung 18 nicht in einer um 90° verdrehten Stellung montiert werden kann, da die Verriegelungsstifte in dieser Stellung nicht auf die entsprechenden Bohrungen treffen würden. Ebenfalls benachbart zu den beiden Handgriffen 20 befindet sich jeweils eine kleine Bohrung 34 für einen Verriegelungsstift 30.

Ebenfalls erkennbar ist in Fig. 3a eine um die gesamte Abdeckung 18 umlaufende Gummidichtung 40, die insbesondere ein Klappern der Abdeckung 18 in der an der Bodenplatte 14 montierten Stellung verhindert. Gleichzeitig schützt die umlaufende Dichtung 40 vor Verletzungen beim Handhaben der Abdeckung 18 an deren Kanten.

Figur 3b zeigt eine Variante einer Abdeckung 18, die hinsichtlich der Handgriffe 20 und der nahe der Handgriffe 20 angeordneten Langlöcher 32 der Fig. 3a gleicht. Die beiden weiteren Langlöcher 32, die in der Fig. 3b zwischen den Handgriffen 20 angeordnet sind, sind jedoch anders als in Fig. 3a derart asymmetrisch angeordnet, dass die Abdeckung 18 nur in einer einzigen Drehstellung montiert werden kann. Die Handgriffe 20 und die nahe der Handgriffe 20 angeordneten Langlöcher 32 sind auf einer horizontalen Linie angeordnet. Relativ zu einer vertikalen Linie ist das obere Langloch 32 um einen Winkel β versetzt angeordnet, das untere Langloch 32 um einen von β verschiedenen Winkel α.

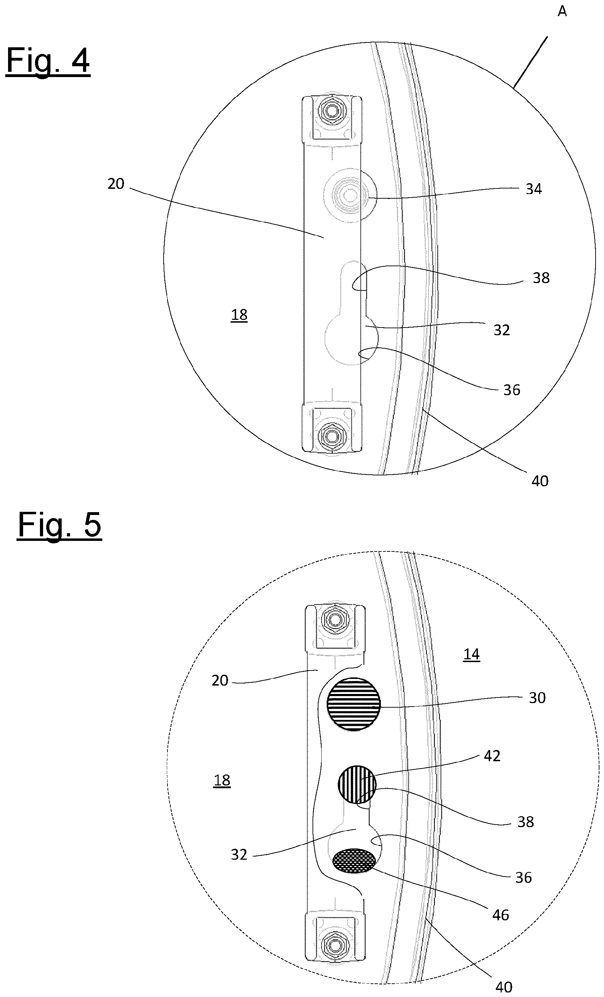

In Fig. 4 ist der in Fig. 3b rechts befindliche Handgriff 20 vergrößert dargestellt, gemeinsam mit dem benachbarten Langloch 32 und der Bohrung 34. Gut erkennbar ist die Schlüssellochform des Langlochs 32, mit einem kreisförmigen Abschnitt 36 und einem schlitzförmigen Abschnitt, der einen Führungsschlitz 38 bildet.

Figur 5 zeigt einen Ausschnitt der Abdeckung 18 mit Handgriff 20 in der an der Bodenplatte 14 befestigten Stellung. Man erkennt den Kopf 42 einer Kragenschraube 44 (siehe Fig. 6), die gemeinsam mit dem Langloch 32 eine Halterung der Abdeckung 18 an der Bodenplatte 14 bildet. Die in Fig. 5 gezeigte Stellung ergibt sich nach dem Heranführen der Abdeckung 18 an die Bodenplatte 14 in einer Stellung, in der der Kopf 42 in den kreisförmigen Abschnitt 36 des Langlochs 32 eingesetzt worden ist, und nach dem Ausführen einer Rotationsbewegung um etwa 3° im Uhrzeigersinn. In der dann erreichten Stellung hintergreift der Kopf 42 den Führungsschlitz 38, sodass die Abdeckung 18 formschlüssig an der Bodenplatte 14 gehalten ist.

Figur 5 zeigt außerdem einen Verriegelungsstift 30, der in der Bohrung 34 (siehe Fig. 2) der Abdeckung 18 befestigt und in die Bohrung 28 in der Bodenplatte 14 eingreift, um die Rotationsbewegung zu verriegeln.

Schließlich zeigt Figur 5 eine Markierung 46 an der Bodenplatte 14, die am unteren Rand des kreisförmigen Abschnitts 36 des Langlochs 32 sichtbar wird, nachdem die Abdeckung 18 in die vorgesehene Stellung rotiert wurde. Die Sichtbarkeit dieser Markierung 46 durch das Langloch 32 hindurch zeigt an, dass die vorgesehene Drehstellung erreicht wurde.

In der Schnittdarstellung der Fig. 6 ist eine der Bohrungen 24 in der Bodenplatte 14 im Bereich des Rings 22 der Bodenplatte 14 sowie die darin eingesetzte Gewindehülse 26 sichtbar. In diese Gewindehülse 26 ist die Kragenschraube 44 eingeschraubt. Der umlaufende Kragen 48 der Kragenschraube 44 ist mit der Gewindehülse 26 und/oder mit der oben befindlichen Seite der Bodenplatte 14 verspannt. Gut erkennbar ist auch der Kopf 42 der Kragenschraube und der zwischen Kragen 48 und Kopf 42 befindliche Längsabschnitt mit geringerem Durchmesser. In Fig. 6 sieht man außerdem die umlaufende Dichtung 40, die auf den Rand der Abdeckung 18 aufgeschoben ist und die zwischen der Abdeckung 18 und der Bodenplatte 14 einen elastisch verformbaren Abschnitt 50 aufweist.

Figur 7 zeigt eine weitere Schnittdarstellung ähnlich der Fig. 6, wobei die Schnittebene diesmal durch den Verriegelungsstift 30 hindurch verläuft. Man erkennt, dass dieser in die Bohrung 34 der Abdeckung 18 eingesetzt ist und einen Feder-Abschnitt 52 aufweist, der in die korrespondierend angeordnete Bohrung 28 in der Bodenplatte 14 einrastet. Um diese Verriegelung zu lösen, kann der Verriegelungsstift 30 an seinem vergrößerten Kopf mit der Hand ein stückweit gegen die Kraft der Feder herausgezogen werden.

Figur 7 gibt weiterhin Aufschluss über den Aufbau der Bodenplatte 14 in Sandwichbauweise mit zwei Deckschichten 54 und einem dazwischen angeordneten Kernmaterial 56. Im Bereich der Durchstiegsöffnung 16 befindet sich zwischen den Deckschichten anstelle des Kernmaterials 56 der Ring 22 aus Volllaminat.

### Liste der Bezugszeichen

- 10: Windenergieanlagenrotorblatt
- 12: Blattwurzel
- 14: Bodenplatte
- 16: Durchstiegsöffnung
- 18: Abdeckung
- 20: Handgriff
- 22: Ring
- 24: Bohrung
- 26: Gewindehülse
- 28: Bohrung
- 30: Verriegelungsstift
- 32: Langloch
- 34: Bohrung
- 36: kreisförmiger Abschnitt
- 38: Führungsschlitz
- 40: Dichtung
- 42: Kopf
- 44: Kragenschraube
- 46: Markierung
- 48: Kragen
- 50: elastischer Abschnitt
- 52: Feder-Abschnitt
- 54: Deckschicht
- 56: Kernmaterial

## Patentansprüche

1. Windenergieanlagenrotorblatt (10) mit einer Bodenplatte (14), die eine Durchstiegsöffnung (16) aufweist, und einer Abdeckung (18), mit der die Durchstiegsöffnung (16) verschließbar ist, **gekennzeichnet durch**
• eine Halterung, die so ausgebildet ist, dass eine Bewegung der Abdeckung (18) relativ zu der Bodenplatte (14) in einer vorgegebenen Richtung parallel zur Ebene der Bodenplatte (14) einen formschlüssigen Halt der Abdeckung (18) an der Bodenplatte (14) bewirkt, und
• eine Verriegelung, die eine Bewegung der Abdeckung (18) in einer zu der vorgegebenen Richtung entgegengesetzten Richtung blockiert.

2. Windenergieanlagenrotorblatt (10) nach Anspruch 1, **dadurch gekennzeichnet, dass** die Bewegung eine Rotationsbewegung ist.

3. Windenergieanlagenrotorblatt (10) nach Anspruch 1 oder 2, **dadurch gekennzeichnet, dass** die Halterung mehrere Führungsschlitze (38), die jeweils entlang der vorgegebenen Richtung verlaufen, und mehrere damit zusammenwirkende Stifte aufweist, die in die Führungsschlitze (38) eingreifen, wobei die Führungsschlitze (38) an der Abdeckung (18) und die Stifte an der Bodenplatte (14) angeordnet sind oder umgekehrt.

4. Windenergieanlagenrotorblatt (10) nach Anspruch 3, **dadurch gekennzeichnet, dass** die Führungsschlitze (38) und die Stifte asymmetrisch angeordnet sind, so dass die Abdeckung (18) nur in einer einzigen Orientierung so an der Bodenplatte (14) angeordnet werden kann, dass die Stifte in die Führungsschlitze (38) eingreifen.

5. Windenergieanlagenrotorblatt (10) nach Anspruch 3 oder 4, **dadurch gekennzeichnet, dass** die Führungsschlitze (38) schlüssellochförmige Langlöcher (32) sind.

6. Windenergieanlagenrotorblatt (10) nach einem der Ansprüche 3 bis 5, **dadurch gekennzeichnet, dass** in die Bodenplatte (14) Gewindehülsen (26) eingesetzt sind, in die die Stifte eingeschraubt sind.

7. Windenergieanlagenrotorblatt (10) nach einem der Ansprüche 3 bis 6, **dadurch gekennzeichnet, dass** die Stifte Bund- oder Kragenschrauben (44) sind.

8. Windenergieanlagenrotorblatt (10) nach einem der Ansprüche 1 bis 7, **dadurch gekennzeichnet, dass** die Bodenplatte (14) einen Ring (22) aus einem Faserverbundmaterial aufweist, der die Durchstiegsöffnung (16) begrenzt.

9. Windenergieanlagenrotorblatt (10) nach einem der Ansprüche 1 bis 8, **dadurch gekennzeichnet, dass** die Verriegelung einen Schnappmechanismus aufweist, der nach Abschluss der Bewegung der Abdeckung (18) relativ zu der Bodenplatte (14) einrastet.

10. Windenergieanlagenrotorblatt (10) nach Anspruch 9, **dadurch gekennzeichnet, dass** der Schnappmechanismus mindestens einen Verriegelungsstift (30) aufweist, der durch Federkraft in eine verriegelte Stellung gelangt.

11. Windenergieanlagenrotorblatt (10) nach Anspruch 9 oder 10, **dadurch gekennzeichnet, dass** der Schnappmechanismus eine Anzeige aufweist, die eine eingerastete Stellung des Schnappmechanismus anzeigt.

12. Windenergieanlagenrotorblatt (10) nach einem der Ansprüche 1 bis 11, **dadurch gekennzeichnet, dass** an der Bodenplatte (14) und/oder an der Abdeckung (18) eine Markierung (46) angeordnet ist, die die Anordnung der Abdeckung (18) in einer ordnungsgemäß geschlossenen Position anzeigt.

13. Windenergieanlagenrotorblatt (10) nach einem der Ansprüche 1 bis 12, **dadurch gekennzeichnet, dass** die Abdeckung (18) zwei Handgriffe (20) aufweist.

14. Windenergieanlagenrotorblatt (10) nach Anspruch 13, **dadurch gekennzeichnet, dass** die Verriegelung zwei Verriegelungselemente aufweist, die benachbart zu den Handgriffen (20) angeordnet sind.
